# EUROPÄISCHE PATENTSCHRIFT

(11) **EP 0 525 150 B1**
(45) Veröffentlichungstag und Bekanntmachung des Hinweises auf die Patenterteilung: **03.08.1994**
(21) Anmeldenummer: 92904384.2
(22) Anmeldetag: 05.02.1992
(51) Int. Cl.: C01B 3/48, C01B 3/14

(54) **VERFAHREN ZUR ERZEUGUNG EINES ROHSYNTHESEGASES AUS KOHLENWASSERSTOFFHALTIGEM EINSATZGAS**
PROCESS FOR PRODUCING RAW SYNTHESIS GAS FROM INPUT GAS CONTAINING HYDROCARBONS
PROCEDE DE PRODUCTION DE GAZ BRUTS DE SYNTHESE A PARTIR DE MATIERES PREMIERES GAZEUSES CONTENANT DES HYDROCARBURES

(30) Priorität: 08.02.1991 DE 4103831
(43) Veröffentlichungstag der Anmeldung: 03.02.1993
(73) Patentinhaber: Uhde GmbH, 44141 Dortmund (DE)
(72) Erfinder: HEDERER, Hartmut, D-4600 Dortmund 50 (DE); HERBORT, Hans-Joachim, D-5758 Fröndenberg (DE)
(74) Vertreter: Patentanwälte Meinke, Dabringhaus und Partner
(86) Internationale Anmeldenummer: EP9200249
(87) Internationale Veröffentlichungsnummer: WO9213796

(56) Entgegenhaltungen:
- EP-A- 0 044 071
- EP-A- 0 278 063
- Patent Abstracts of Japan, vol. 014, no. 459 (C-0767) 4. Okt. 1990 & JP,A,2 188 405 (FUJI ELECTRIC CO LTD) 24.7.1990
- nitrogen nr. 178, März 1989, Seiten 30-39; s. Seite 38, Spalte 1, Abs. 3 - Seite 38, Spalte 2, Abs. 3

## Beschreibung

Die Erfindung richtet sich auf ein Verfahren zur Erzeugung eines Rohsynthesegases aus kohlenwasserstoffhaltigem Einsatzgas durch Dampfreformierung und/oder partielle Oxidation durch anschließende exotherm verlaufende CO-Konvertierung, wobei das Einsatzgas durch verdampfendes Prozeßwasser aufgesättigt und ggf. mit Dampf angereichert wird.

Zur Erzeugung von Synthesegasen oder Wasserstoff werden vorwiegend gasförmige Kohlenwasserstoffe eingesetzt, denen Dampf zugemischt wird und die in einem der genannten Verfahrensschritte, ggf. unter Verwendung eines sauerstoffhaltigen Gases, zu Spaltgas umgesetzt werden. Das Spaltgas enthält vorwiegend Wasserstoff H₂, Kohlenmonoxid CO, Kohlendioxid CO₂, Wasserdampf und ggf. Stickstoff. In einem der Spaltgaserzeugung folgenden Verfahrensschritte wird das Kohlenmonoxid CO katalytisch zu CO₂ konvertiert gemäß der Beziehung CO + H₂O ⇒ CO₂ + delta(H). Diese Reaktion verläuft exotherm. Im Verlauf weiterer Prozeßschritte erfolgt eine Kühlung des konvertierten Gases und eine Kondensation des Gleichgewichtsdampfes. Dieses Kondensat wird abgeschieden und kann als Prozeßwasser eingesetzt werden. Dieses Prozeßwasser wird üblicherweise einer mehrstufigen Reinigung unterzogen und dann den Dampfkesseln der Anlage als Speisewasser wieder zugeführt.

Zum Stand der Technik sei auf die DE-A-15 92 281 hingewiesen, die sich mit der Konvertierung von Kohlenmonoxid mittels Wasserdampfes beschäftigt. Die Literaturstelle "JP-2 188 405-A Patent Abstracts of Japan, C-767, Oct. 4, 1990, Vol. 14, No. 459" beschreibt die unmittelbare Einspritzung von Wasser in die Katalysatorschüttung.

In jüngerer Zeit wurden Systeme entwickelt, bei denen dieses Prozeßwasser im wesentlichen ungereinigt erhitzt und dann in einer Füllkörperkolonne oder einem Saturierer im Gegenstrom zum Einsatzgas zugeführt wurde, um es mit Dampf zu sättigen.

Eine Methode der Wiederverwendung von Prozeßwasser ohne vorherige Reinigung wird in der EP 0 235 429 beschrieben. Dabei wird Prozeßwasser in die führenden Rohre eines Rohrwärmeaustauschers eingespritzt, der vom Rauchgas eines Reformers oder von dem aus einer adiabaten Konvertierung austretenden Gas beheizt wird. Nachteilig bei diesem System ist, daß zur optimalen Verdampfung ein kompliziertes Wasseraufgabesystem erforderlich ist, daß zur völligen Verdampfung eine Wasserrezirkulation mit Pumpe erforderlich ist und daß die Zweiphasenströmung in parallelen Rohrwegen eine aufwendige, dieser Strömungsform entsprechende Gestaltung des Wärmetauschers erforderlich macht.

Darüber hinaus muß bei Anwendung dieses Systems im Abgasstrom einer Konvertierung bei dieser Konvertierung auf die Vorteile der isothermen Reaktionsführung verzichtet werden.

Eine weitere, diesem Aspekt Rechnung tragende Methode wird in einem Artikel der Firma ICI im Journal "Nitrogen", Ausgabe März-April 89, unter dem Titel "LCA: breaking the mould at Severnside" vorgeschlagen. Nachteilig bei diesem System ist der große apparative Aufwand, der benötigte große, durch Pumpen zu gewährleistende und energieverbrauchende Wasserkreislauf sowie die an die Sattdampftemperatur des Prozeßwassers gebundene Konvertierungstemperatur.

In einer weiteren Publikation vom 22.08.1990 "Process Condensate Purification in Ammonia Plants" by Jörgen Madsen, die auf dem AICHE 1990 Summer National Meeting in San Diego, USA, Paper No. 100 d, vorgestellt wurde, ist der Stand der Technik in der Verwendung von Prozeßwasser schließlich umfassend dargestellt.

Aus "Nitrogen", Nr. 178 (1989), S. 30 bis 39, ist eine CO-Shiftreaktion bekannt, bei der nur Prozeßkondensat zur Kühlung herangezogen wird. Die EP-A-44 071 zeigt eine Rohsynthesegaserzeugung, bei der in das Rohgas Dampf eingespritzt und im Behälter 12 weiter mit Wasserdampf aufgesättigt und nacheinander einer HT- und einer LT-Konvertierungsstufe zugeleitet wird.

Aufgabe der Erfindung ist die Schaffung einer Lösung, mit der ungereinigtes Prozeßwasser statt in einer Prozeßwasseraufbereitung in einer CO-Konvertierung genutzt und die Führung der exothermen Reaktionen verbessert und der apparative Aufwand gemindert wird.

Mit einem Verfahren der eingangs bezeichneten Art wird diese Aufgabe gemäß der Erfindung dadurch gelöst, daß die CO-Konvertierungsreaktion gleichzeitig indirekt durch verdunstendes, verdampfendes Prozeßwasser und Einsatzgas gekühlt wird, daß die Temperatur des aus der Konvertierung austretenden Synthesegases kleiner oder gleich der Temperatur des in die Konvertierung eintretenden Spaltgases gehalten wird und daß bei der Kühlung eine Sättigung des Einsatzgases vorgenommen wird.

Durch diese Art der Verfahrensführung wird u.a. erreicht, daß zum einen die exotherme Reaktion gekühlt wird, zum anderen das Prozeßwasser wenigstens zum Teil gleichzeitig seine Wärme an das es blasenförmig durchsetzende Einsatzgas abgibt, wobei sich dieses gleichzeitig mit Dampf aufsättigt.

Das die Konvertierung verlassende Rohsynthesegas kann direkt abgekühlt oder weiteren Verfahrensstufen zugeführt werden, wobei gewöhnlich durch Abkühlung der Gleichgewichtsdampf auskondensiert wird, das Kondensat abgeschieden und als Prozeßwasser dem Prozeß wieder zugeführt wird.

Das erfindungsgemäße Verfahren erreicht so die Sättigung des Einsatzgases ohne Verwendung zusätzlicher Apparaturen, wie Befeuchter und Wärmetauscher, und ohne Verwendung von Rezirkulationspumpen. Es wird ferner erreicht, daß in den Dampf-/Gasblasen der Dampfdruck gegenüber einer Verdampfung deutlich herabgesetzt wird und somit die Konvertierungstemperatur bei gleichem Spaltgasdruck abgesenkt werden kann. Es ist ferner von Vorteil, daß besonders in Bereichen auslaufender und sich dem Gleichgewicht nähernder Reaktion durch die Gasblasen eine wärmeübergangsfördernde Turbulenz erzeugt wird. Es ist auf diese Weise sogar gegeben, daß die Temperatur des konvertierenden Gases mit fortschreitender Reaktion abnimmt und so das Konvertierungsergebnis besser als bei einer ideal isotherm geführten Reaktion ausfällt.

Strömungsführung und Wahl der Eintrittstemperatur des Einsatzgases in die Wasserseite des Konverters ermöglichen eine Prozeßführung, bei der die Austrittstemperatur des Rohsynthesegases aus dem CO-Konverter gleich oder kleiner der Eintrittstemperatur des Spaltgases in den CO-Konverter ist.

Weitere Vorteile ergeben sich aus den Unteransprüchen. Dabei ist es von Vorteil, mit der Kühlung einer Erzeugung von Überschußdampf vorzunehmen, wie dies die Erfindung ebenfalls vorsieht. Zweckmäßig wird die Kühlung des konvertierenden Spaltgases oder des Syntheseproduktes mit dem sich aufsättigenden Einsatzgas im Gegenstrom vorgenommen. Das Einsatzgas kann aber auch im Gleich- oder im Kreuzstrom mit dem konvertierenden Spaltgas geführt werden.

Es ist weiterhin vorteilhaft, daß das Verfahren erlaubt, mit einer beliebigen Temperatur des Einsatzgases im Bereich von 60 bis 440°C in die Wasserseite des CO-Konverters einzutreten und/oder daß die Temperatur des aus der Konvertierung austretenden Synthesegases kleiner/gleich der Temperatur des in die Konvertierung eintretenden Spaltgases gehalten wird.

Der Druck des die Konvertierung kühlenden Wasser/Gasgemisches kann je nach Art und Druckverlust der Spaltgaserzeugung nur geringfügig über dem des zu konvertierenden Spaltgases liegen, nicht mehr als 5 bar, vorzugsweise nicht mehr als 2,5 bar.

Eine weitere, in diesem Sinne vorteilhafte Ausgestaltung des Prozesses besteht darin, daß innerhalb des CO-Konverters das zu verdampfende Wasser nach dem Prinzip eines natürlichen Umlaufes gefahren wird, wobei die Wasserstandsregelung so gestaltet wird, daß durch unterschiedliche Wasserstände der inneren Zirkulation unterschiedliche Widerstände entgegengesetzt werden, wodurch ein weiteres, das Reaktionsprofil beeinflussendes Element geschaffen wird.

Ferner ist das Verfahren geeignet, je nach Drucklage der Spaltgaserzeugung einen Hochtemperatur-, einen Mitteltemperatur- oder Tieftemperaturkatalysator zu verwenden. Die Drucklage der Spaltgaserzeugung hat einen wesentlichen Einfluß auf die Temperaturlage der CO-Konvertierung, da das in der CO-Konvertierung erzeugte Gas-/Dampfgemisch einerseits ein druckabhängiges Kühlmittel der CO-Konvertierung und andererseits einen Einsatz in die Spaltgaserzeugung darstellt.

Infolge der Gegebenheiten, im Verlaufe der Reaktion eine fallende Temperatur erzeugen zu können, ist es weiterhin vorteilhaft, einen für die jeweilige Temperaturlage geeigneten Katalysator nacheinander in Strömungsrichtung des zu konvertierenden Gases anzuordnen, z.B. einen Mitteltemperaturkatalysator als erste Schicht und einen Tieftemperaturkatalysator als zweite Schicht.

In weiterer Ausgestaltung des Verfahrens ist es zweckmäßig, das Prozeßwasser vorzuwärmen, z.B. durch das aus der CO-Konvertierung austretende Rohsynthesegas, auch kann es je nach CO-Gehalt des Spaltgases erforderlich werden, dem Prozeßwasser ein Zusatzwasser zuzuführen. Das Zusatzwasser wird erforderlichenfalls durch Abwärme, die bei der nachgeschalteten weiteren Gasverarbeitung anfällt, vorgewärmt. Auch kann es erforderlich werden, dem Gas-/Dampfgemisch aus der Konvertierung einen Zusatzdampf zuzuführen, um die Belange der Spaltgaserzeugung zu befriedigen.

Je nach Art der Spaltgaserzeugung kann die gewünschte Eintrittstemperatur des Spaltgases in die CO-Konvertierung eingestellt werden durch vorteilhaftem Wärmeaustausch, z.B. Dampferzeugung oder Vorwärmung des Gas-/Dampfgemisches, das zur Spaltgaserzeugung geht, oder beides oder Vorwärmung anderer geeigneter Prozeßströme.

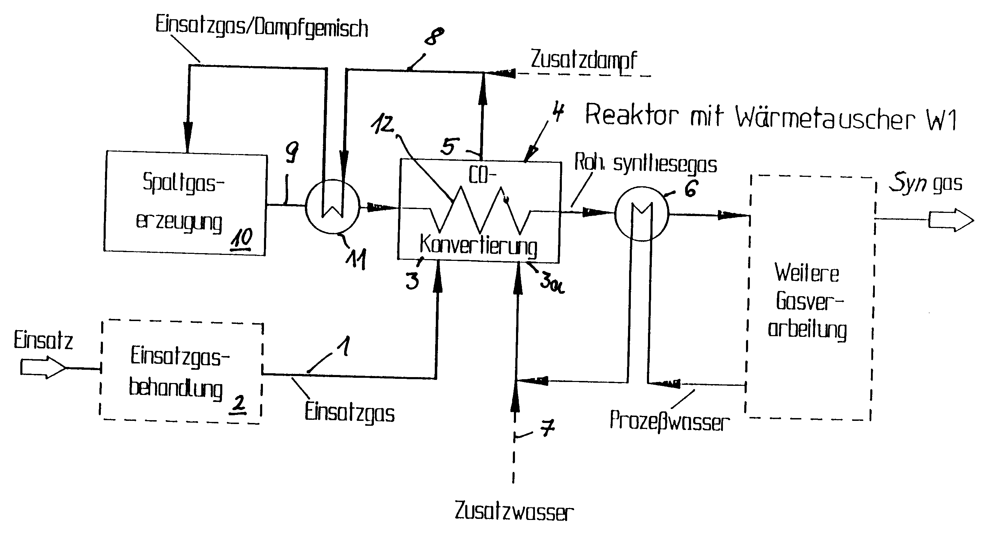

Die Erfindung ist als Beispiel in der Figur näher dargestellt. Diese zeigt ein Fließschema des erfindungsgemäßen Prozesses.

Diese Figur stellt eine der möglichen Varianten des Verfahrens dar. Einsatzgas 1, im allgemeinen entschwefeltes Erdgas, tritt nach Durchlaufen einer Einsatzgasbehandlung 2 im Bereich von 60 bis 440°C in die Prozeßwasserseite 3 eines CO-Konvertierungsreaktors 4 ein und wird dort fein verteilt. Auf ihrem Weg zur Ausgangsseite 5 der CO-Konvertierung 4 sättigen sich die Gasblasen mit verdampfendem Prozeßwasser auf.

Das Prozeßwasser wird aus dem Rohsynthesegas durch Kühlung und Kondensation abgetrennt, im Wärmetausch 6 von Rohsynthesegas aufgewärmt, ggf. mit Zuatzwasser 7 gemischt, und ebenfalls der Prozeßwasserseite 3a der CO-Konvertierung 4 zugeführt. Einsatzgas und Prozeßwasser nehmen durch Erwärmung, Befeuchtung und Verdampfung die Reaktionswärme der Konvertierungsreaktion vollständig auf.

Das die CO-Konvertierung verlassende Einsatzgas/Dampf-Gemisch 8 wird vom Austrittsstrom 9 aus der Spaltgaserzeugung 10 weiter im Austauscher 11 erhitzt. Dabei wird der Strom 9 auf die Konvertierungseintrittstemperatur abgekühlt. Das in die CO-Konvertierung eintretende Spaltgas wird in mit handelsüblichen Katalysatoren gefüllte Passagen 12 geleitet und gibt dort die in den Passagen entstandenen Reaktionswärme an das die Passagen kühlende Gemisch aus Wasser, Einsatzgas und Dampf ab.

Das vorgewärmte Einsatzgas/Dampf-Gemisch tritt, ggf. nach Beifügen eines Zusatzdampfes in die Spaltgaserzeugung ein. Es gibt eine Vielzahl von Spaltgaserzeugungen, allotherme und autotherme sowie Kombinationen aus beiden, die dem Fachmann wohl bekannt sind. Für das hier vorgestellte Verfahren ist es weitgehend unerheblich, um welche Spaltgaserzeugung es sich dabei handelt, sofern der Einsatz aus leichten gasförmigen Kohlenwasserstoffen, z.B. Erdgas, besteht. Das erzeugte Spaltgas wird nach Abkühlung der CO-Konvertierung zugeführt.

### Beispiel:

Einsatzgas ist trockenes, schwefelfreies Erdgas. Dieser Einsatzgasstrom (24252 kg/h) wird in den mit Wasser gefüllten Teil des Reaktors (4) (mit integriertem Wärmeaustauscher W1) direkt eingeblasen. Durch die Aufsättigung des Einsatzgases wird dem Wasser Wärme entzogen, die aber gleichzeitig von dem inneren Wärmeaustauscher W1 dem Wasser wieder zugeführt und die aus der Wärmetönung der CO-Konvertierung entstammt. Das trockene Einsatzgas sättigt sich unter Druck entsprechend der Wassertemperatur mit Wasserdampf. Im Wasser stellt sich bei einem Massenstrom von 65601 kg/h und der intensiven Vermischung des Wassers durch die aufsteigenden Einsatzgasblasen eine gleichmäßige Temperatur von ca. 223°C ein. Der Wasserspiegel im Reaktor (4) wird mittels Zusatzwasser konstant gehalten.

Das in die Passagen (12) eintretende und reagierende Spaltgas wird laufend durch Wärmeaustausch mit dem umgebenden Wasser, Dampf und dem im Gegenstrom geführten Einsatzgas gekühlt. Das gesättigte Einsatzgas (89853 kg/h) tritt mit ca. 223°C und ca. 42 bar abs. aus dem mit Wasser gefüllten Teil des Reaktors (4) aus und tritt dann in die Synthesegaserzeugung ein, wobei Methan mit Wasser zu CO und H₂ katalytisch gespalten wird, dann abgekühlt und mit ca. 440°C in den Reaktor (4) geführt wird. Im Reaktor (4) werden 26960 kg/h CO und 15844 kg/h Wasser zu 38707 kg/h CO₂ und 1772,4 kg/h wasserstoff umgewandelt. Ein Rest von 2324,6 kg/h CO bleibt und wird im Rahmen der weiteren Gasverarbeitung in der nachfolgenden Methanisierung umgesetzt.

## Patentansprüche

1. Verfahren zur Erzeugung eines Rohsynthesegases aus kohlenwasserstoffhaltigem Einsatzgas durch Dampfreformierung und/oder partielle Oxidation durch anschließende exotherm verlaufende CO-Konvertierung, wobei das Einsatzgas durch verdampfendes Prozeßwasser aufgesättigt und ggf. mit Dampf angereichert wird,
dadurch gekennzeichnet,
daß die CO-Konvertierungsreaktion gleichzeitig indirekt durch verdunstendes, verdampfendes Prozeßwasser und Einsatzgas gekühlt wird,
daß die Temperatur des aus der Konvertierung austretenden Synthesegas kleiner oder gleich der Temperatur des in die Konvertierung eintretenden Spaltgases gehalten wird und daß bei der Kühlung eine Sättigung des Einsatzgases vorgenommen wird.

2. Verfahren nach Anspruch 1,
dadurch gekennzeichnet,
daß neben der Sättigung des Einsatzgases bei der Kühlung eine Erzeugung von Überschußdampf vorgenommen wird.

3. Verfahren nach Anspruch 1 oder 2,
dadurch gekennzeichnet,
daß die indirekte Kühlung des konvertierenden Spaltgases oder des Syntheseproduktes mit dem sich aufsättigenden Einsatzgas im Kreuz- oder Gegenstrom vorgenommen wird.

4. Verfahren nach einem der vorangehenden Ansprüche,
dadurch gekennzeichnet,
daß die Einspeisung des Einsatzgases in das zur Kühlung eingesetzte Prozeßwasser in einem Temperaturbereich des Einsatzgases von 60 bis 440°C liegt.

5. Verfahren nach einem der vorangehenden Ansprüche,
dadurch gekennzeichnet,
daß der Druck des kühlenden Einsatzgas-/Prozeßwassergemisches nicht mehr als 5 bar, vorzugsweise nicht mehr als 2,5 bar, über dem Druck des zu konvertierenden Spaltgases bzw. Syntheseproduktes liegt.

6. Verfahren nach einem der vorangehenden Ansprüche,
dadurch gekennzeichnet,
daß durch Variation des Prozeßwasserstandes der Prozeßwasserumlauf im CO-Konverter eingestellt und das Reaktionsprofil entlang des CO-Konvertierungskatalysators beeinfußt wird.

7. Verfahren nach einem der vorangehenden Ansprüche,
dadurch gekennzeichnet,
daß je nach Drucklage der Spaltgas- bzw. Produkterzeugung ein Hochtemperatur-, ein Mitteltemperatur- oder ein Niedertemperaturkatalysator eingesetzt wird.

8. Verfahren nach einem der vorangehenden Ansprüche,
dadurch gekennzeichnet,
daß in der CO-Konvertierung unterschiedliche, in Schichten angeordnete Katalysatoren, insbesondere ein Mitteltemperaturkatalysator als erste Schicht und ein Niedertemperaturkatalysator als nachfolgende zweite Schicht vom Spaltgas nacheinander beaufschlagt werden.

9. Verfahren nach einem der vorangehenden Ansprüche,
dadurch gekennzeichnet,
daß das zur Kühlung eingesetzte Wasser sich zusammensetzt aus Prozeßwasser und einem Zusatzwasser und daß mindestens das Prozeßwasser vorgewärmt wird und/oder daß das in die CO-Konvertierung eintretende Spaltgas mittels eines Wärmetauschers auf die gewünschte Eintrittstemperatur eingestellt wird.

## Claims

1. A process for the production of a crude synthesis gas from hydrocarbon-bearing charge gas by steam reforming and/or partial oxidation by subsequent exothermally occurring CO-conversion, wherein the charge gas is saturated by vaporising process water and possibly enriched with vapour, characterised in that
the CO-conversion reaction is simultaneously indirectly cooled by evaporating, vaporising process water and charge gas,
the temperature of the synthesis gas issuing from the conversion step is kept lower than or equal to the temperature of the cracking gas which passes into the conversion step, and
in the cooling step saturation of the charge gas is effected.

2. A process according to claim 1 characterised in that besides saturation of the charge gas in the cooling step an operation for the production of excess vapour is effected.

3. A process according to claim 1 or claim 2 characterised in that the indirect cooling of the converting cracking gas or the synthesis product with the saturating charge gas is effected in cross-flow or counter-flow relationship.

4. A process according to one of the preceding claims characterised in that the feed of the charge gas into the process water which is used for the cooling step is in a temperature range in respect of the charge gas of from 60 to 440°C.

5. A process according to one of the preceding claims characterised in that the pressure of the cooling charge gas/process water mixture is not more than 5 bars, preferably not more than 2.5 bars, above the pressure of the synthesis product or cracking gas to be converted.

6. A process according to one of the preceding claims characterised in that by a variation in the process water level the process water circulation in the CO-converter is adjusted and the reaction profile along the CO-conversion catalyst is influenced.

7. A process according to one of the preceding claims characterised in that a high-temperature, a medium-temperature or a low-temperature catalyst is used depending on the pressure position of the cracking gas or product production.

8. A process according to one of the preceding claims characterised in that in the CO-conversion step different catalysts which are arranged in layers, in particular a medium-temperature catalyst as a first layer and a low-temperature catalyst as a subsequent second layer, are successively acted upon by the cracking gas.

9. A process according to one of the preceding claims characterised in that the water which is used for the cooling step is composed of process water and added water and that at least the process water is preheated and/or that the cracking gas which passes into the CO-conversion operation is adjusted to the desired intake temperature by means of a heat exchanger.

## Revendications

1. Procédé de production d'un gaz brut de synthèse à partir de matières premières gazeuses contenant des hydrocarbures par reformage en phase vapeur et/ou oxydation partielle au moyen de conversion finale exothermique de CO, la matière première gazeuse étant sursaturée au moyen de l'eau du procédé se trouvant en phase de vapeur et éventuellement enrichie avec de la vapeur, caractérisé par le fait que la réaction de conversion de CO est refroidie simultanément, indirectement, au moyen de matière première gazeuse et d'eau de procédé vaporisée et volatilisée, et par le fait que la température du gaz de synthèse sortant du convertisseur est inférieure ou égale à la température du gaz de craquage pénétrant dans le convertisseur et par le fait que la matière première gazeuse est saturée lors du refroidissement.

2. Procédé selon la revendication 1, caractérisé par le fait qu'une production de vapeur excédentaire est réalisée en plus de la saturation de la matière première gazeuse.

3. Procédé selon la revendication 1 ou 2, caractérisé par le fait qu'un refroidissement indirect du gaz de craquage à convertir ou du produit de synthèse est réalisé au moyen de la matière première gazeuse le saturant en écoulement inverse ou parallèle.

4. Procédé selon l'une des revendications précédentes, caractérisé par le fait que l'introduction de la matière première gazeuse dans l'eau de procédé mise en oeuvre pour le refroidissement est effectuée entre 60 et 440°C.

5. Procédé selon l'une des revendications précédentes, caractérisé par le fait que la pression du mélange refroidissant matière première gazeuse/eau de procédé ne s'élève pas à plus de 5 bars, de préférence ne s'élève pas à plus de 2,5 bars au-dessus de la pression du gaz de craquage du produit de synthèse à convertir.

6. Procédé selon l'une des revendications précédentes, caractérisé par le fait que le cycle du procédé dans le convertisseur à CO est réglé par la variation de l'état physique de l'eau de procédé et le catalyseur influence le profil de la réaction de la conversion de CO.

7. Procédé selon l'une des revendications précédentes, caractérisé par le fait que selon l'état de pression du gaz de craquage ou de la production du produit, on choisit un catalyseur hautes températures, températures moyennes ou basses températures.

8. Procédé selon l'une des revendications précédentes, caractérisé par le fait, que dans le convertisseur à CO différents catalyseurs disposés en couche, sont alimentés successivement par le gaz de craquage, en particulier un catalyseur moyennes températures en tant que première couche et un catalyseur basses températures en tant que deuxième suivante couche.

9. Procédé selon l'une des revendications précédentes, caractérisé par le fait que l'eau mise en oeuvre pour le refroidissement se compose d'eau du procédé et d'un supplément d'eau et par le fait qu'au moins l'eau du procédé est préchauffée et/ou par le fait que le gaz de craquage pénétrant dans le convertisseur à CO est mis en oeuvre à la température d'entrée souhaitée au moyen d'un échangeur de chaleur.
